(19) Europäisches Patentamt
European Patent Office
Office européen des brevets

(11) **EP 4 191 848 A1**

(12) **EUROPEAN PATENT APPLICATION**

(43) Date of publication:
**07.06.2023 Bulletin 2023/23**

(21) Application number: **21211773.3**

(22) Date of filing: **01.12.2021**

(51) International Patent Classification (IPC):
*H02M 1/00* (2006.01)   *H02M 3/335* (2006.01)
*H02M 3/00* (2006.01)   *H02M 1/10* (2006.01)

(52) Cooperative Patent Classification (CPC):
**H02M 1/0074; H02M 1/0058; H02M 1/10; H02M 3/01; H02M 3/33573; H02M 3/33584**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Energy Switzerland AG 5400 Baden (CH)**

(72) Inventors:
• YUAN, ChunMing
  Beijing, 100062 (CN)
• BURKART, Ralph
  8037 Zürich (CH)
• BAKAS, Panagiotis
  722 24 Västerås (SE)

(74) Representative: **Vossius & Partner Patentanwälte Rechtsanwälte mbB Siebertstraße 3 81675 München (DE)**

(54) **POWER CONTROL OF A POWER CONVERTER BASED ON MIXED TYPES OF POWER CONVERTERS**

(57)    The present disclosure relates to a method for power control of a common power converter comprising a plurality of power converters. The method comprises: determining a number of power converters of the plurality of power converters to be activated; determining, based on the at least one electrical parameter of the plurality of power converters and/or the determined number of power converters to be activated, a ratio of a number of at least one power converter of a first type of the plurality of power converters and a number of at least one power converter of a second type of the plurality of power converters; and operating the plurality of power converters based on the determined number of power converters and the ratio. The present disclosure also relates to a corresponding controller and system.

FIG. 1

**Description**

The present disclosure relates to a method, a controller, and a system for power control of a common power converter comprising a plurality of power converters.

A power converter, in particular a solid-state transformer, SST, is widely used in applications such as an electrical vehicle charging station. In such applications, the load requires a power converter to support a wide voltage range while maintaining a high power efficiency. Conventionally, a dual active bridge, DAB, converter is implemented and controlled using various modulation methods to achieve said effect. A DAB converter advantageously enables a power delivery over a wide output voltage range using various modulation methods. However, the power efficiency of the DAB converter decreases sharply particularly in a low output voltage range, where the efficiency is constrained by voltage gain and a total inductance including a series commutation inductor and an equivalent leakage inductor of the transformer in the DAB and fails to switch off in a zero current or a small current. Alternatively, an LLC resonant converter may be considered to improve the power efficiency. The LLC resonant converter exhibits a high power efficiency when operated at an optimal operation point, but lacks the variability in the output voltage as the power efficiency decreases rapidly when the output voltage deviates from the optimal operation point. Moreover, the range of the operating output voltage, at which the LLC performs optimally, is further limited by the induced magnetizing current and the voltage stress of the resonant capacitor.

Thus, there is a need to improve a method, a controller, and a system for power control of a power converter to achieve a high power transfer efficiency over a wide voltage range.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

**Description of the drawings**

FIG. 1 illustrates an exemplary common power converter comprising a plurality of power converters configured according to an embodiment of the present disclosure.

FIG. 2 illustrates an exemplary bi-directional power converter according to an embodiment of the present disclosure.

FIG. 3 illustrates an exemplary uni-directional power converter according to an embodiment of the present disclosure.

FIG. 4 illustrates voltage gain of a power converter according to an embodiment of the present disclosure with respect to a switching frequency.

FIG. 5 illustrates an exemplary power converter according to an embodiment of the present disclosure.

FIG. 6 summarizes the simulation results using an exemplary power converter according to an embodiment of the present disclosure.

FIG. 7 a) to c) illustrate a simulation results using exemplary power converters according to the embodiments of the present disclosure.

FIG. 8 illustrates a flow chart of a method according to an embodiment of the present disclosure.

FIG. 9 illustrates an exemplary common power converter comprising a plurality of power converters according to an embodiment of the present disclosure.

FIG. 10 illustrates an exemplary common power converter comprising a plurality of power converters according to an embodiment of the present disclosure.

FIG. 11 illustrates a maximum and a minimum input voltage of an exemplary power converter according to an embodiment of the present disclosure.

FIG. 12 a) and b) illustrate the power losses in exemplary power converters according to the embodiments of the present disclosure with respect to the transferred power.

FIG. 13 illustrates a controller and a system comprising the controller and an exemplary common power converter according to an embodiment of the present disclosure.

FIG. 14 illustrates a flow chart for an exemplary power control method according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

In particular, the present disclosure relates a method for power control of a common power converter comprising a plurality of power converters, the method comprising: determining a number of power converters of the plurality of power converters to be activated; determining, based on the at least one electrical parameter of the plurality of power converters and/or the determined number of power converters to be activated, a ratio of a number of at least one power converter of a first type of the plurality of power converters and a number of at least one power converter of a second type of the plurality of power converters; and operating the plurality of power converters based on the determined number of power converters and the ratio.

According to an embodiment, the method comprises operating the at least one power converter of the first type at a constant gain, in particular a constant voltage gain. According to an embodiment, the method comprises adjusting a switching frequency of a modulated control signal for the at least one power converter of the first type.

According to an embodiment, the method comprises iteratively determining the total number, determining the ratio, and operating the plurality of power converters based on the total number and the ratio.

According to an embodiment, the at least one power converter of the first type is configured to output a power different from the at least one power converter of the second type.

According to an embodiment, the common power converter comprises or is a solid-state transformer, SST.

According to an embodiment, the at least one power converter of the first type or the second type comprises or is any one of a dual active bridge converter, DAB, a half bridge converter, a full bridge converter, a matrix converter, a neutral point clamped converter, a flying capacitor converter, a cascaded H-bridge converter, a modular multilevel converter, and a LLC resonant converter.

According to an embodiment, the at least one power converter of the first type and the at least one power converter of the second type are arranged so that the common converter has at least one of a series input and a parallel output, a series input and a series output, or a series input and series-group parallel output.

According to an embodiment, the switching frequency is determined based on at least one parameter of the at least one power converter of the second type, in particular a resonance frequency.

According to an embodiment, the at least one electrical parameter of the plurality of power converters comprises or is any one of a nominal input voltage, a minimum input voltage rate, a maximum input voltage rate, a minimum output voltage rate, a maximum output voltage rate, a minimum input voltage, and a maximum input voltage.

The present disclosure also relates to a controller for power control of a common power converter comprising a plurality of power converters, the controller comprising a processor being configured to: determine a number of power converters of the plurality of power converters to be activated; determine, based on the at least one electrical parameter of the plurality of power converters and/or the determined number of power converters to be activated, a ratio of a number of at least one power converter of a first type of the plurality of power converters and a number of at least one power converter of a second type of the plurality of power converters; and operate the plurality of power converters based on the determined number of power converters and the ratio.

According to an embodiment, the processor is configured to operate the at least one power converter of the first type at a constant gain, in particular a constant voltage gain.

According to an embodiment, the processor is configured to adjust a switching frequency of a modulated control signal for the at least one power converter of the first type.

According to an embodiment, the processor is configured to iteratively determine the total number, determining the ratio, and operating the plurality of power converters based on the total number and the ratio.

According to an embodiment, the at least one power converter of the first type is configured to output a power different from the at least one power converter of the second type.

According to an embodiment, the common power converter comprises or is a solid-state transformer, SST.

According to an embodiment, the at least one power converter of the first type or the second type comprises or is any one of a dual active bridge converter, DAB, a half bridge converter, a full bridge converter, a matrix converter, a neutral point clamped converter, a flying capacitor converter, a cascaded H-bridge converter, a modular multilevel converter, and a LLC resonant converter.

According to an embodiment, the at least one power converter of the first type and the at least one power converter of the second type are arranged so that the common converter has at least one of a series input and a parallel output, a series input and a series output, or a series input and series-group parallel output.

According to an embodiment, the switching frequency is determined based on at least one parameter of the at least one power converter of the second type, in particular a resonance frequency.

According to an embodiment, the at least one electrical parameter of the plurality of power converters comprises or is any one of a nominal input voltage, a minimum input voltage rate, a maximum input voltage rate, a minimum output voltage rate, a maximum output voltage rate, a minimum input voltage, and a maximum input voltage.

The present disclosure further relates to a system for power control of a common power converter comprising a plurality of power converters and a controller according to any one of the above-described embodiments, wherein the controller comprises a processor being configured to perform the method according to the above-described embodiments.

According to an embodiment, the system operates the at least one power converter of the first type at a constant gain, in particular a constant voltage gain.

According to an embodiment, the system adjusts a switching frequency of a modulated control signal for the at least one power converter of the first type.

According to an embodiment, the system iteratively determines the total number, determining the ratio, and operating the plurality of power converters based on the total number and the ratio.

According to an embodiment, the at least one power converter of the first type is configured to output a power different from the at least one power converter of the second type.

According to an embodiment, the common power converter comprises or is a solid-state transformer, SST.

According to an embodiment, the at least one power converter of the first type or the second type comprises or is any one of a dual active bridge converter, DAB, a half bridge converter, a full bridge converter, a matrix converter, a neutral point clamped converter, a flying capacitor converter, a cascaded H-bridge converter, a modular multilevel converter, and a LLC resonant converter.

According to an embodiment, the at least one power converter of the first type and the at least one power converter of the second type are arranged so that the common converter has at least one of a series input and a parallel output, a series input and a series output, or a series input and series-group parallel output.

According to an embodiment, the switching frequency is determined based on at least one parameter of the at least one power converter of the second type, in particular a resonance frequency.

According to an embodiment, the at least one electrical parameter of the plurality of power converters comprises or is any one of a nominal input voltage, a minimum input voltage rate, a maximum input voltage rate, a minimum output voltage rate, a maximum output voltage rate, a minimum input voltage, and a maximum input voltage.

According to another embodiment, the number of the first type power converters is equal to the number of the first type power converters to be activated.

According to an embodiment, the number of the second type power converters is determined based on the number of the first type power converters and/or the total number of the plurality of power converters.

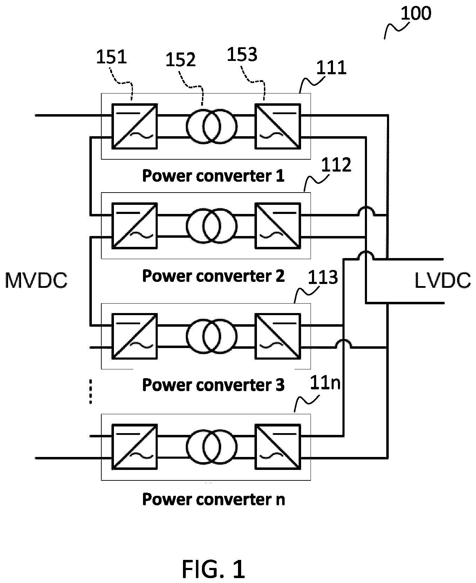

FIG. 1 illustrates an exemplary common power converter comprising a plurality of power converters configured according to an embodiment of the present disclosure. In particular,

FIG. 1 illustrates the common converter 100 comprising n power converters 111 to 11n interconnected in a series input and parallel output, ISOP, topological configuration. Each of the n power converters 111 to 11n comprises a solid-state transformer, SST, in particular a DC/AC inverter 151, a transformer 152, and an AC/DC rectifier 153.

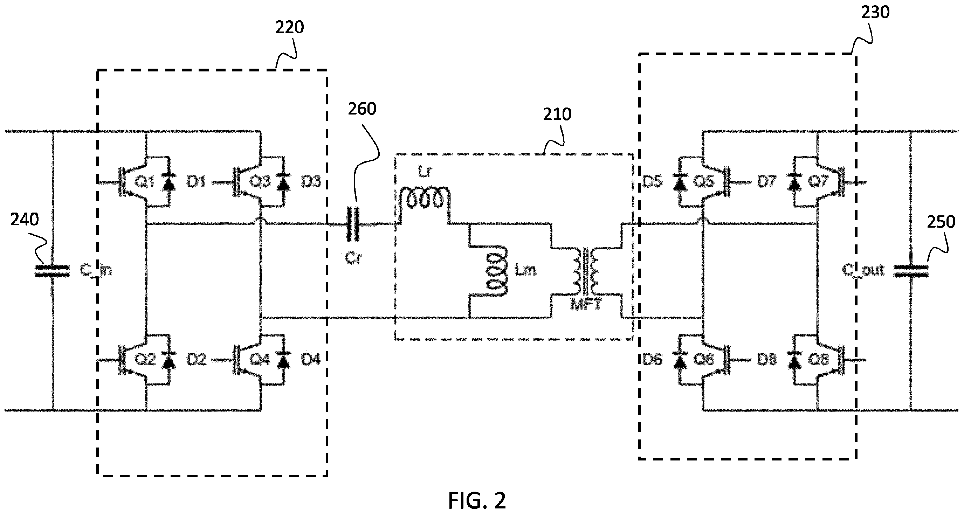

FIG. 2 illustrates an exemplary bi-directional power converter according to an embodiment of the present disclosure. In particular, FIG. 2 illustrates a bi-directional LLC resonant converter.

The bi-directional LLC resonant converter comprises a transformer 210, a capacitor 260 coupled in series to one node of the primary side of the transformer 210, a primary full bridge 220 coupled in parallel to the primary side of the transformer 210, a secondary full bridge 230 coupled in parallel to the secondary side of the transformer 210, an input capacitor 240 coupled to the primary full bridge 220 in parallel, and an output capacitor 250 coupled to the secondary full bridge 230 in parallel. The primary full bridge 220 comprises four diodes parallel connected to the respective four IGBTs to form a full bridge. The secondary full bridge 230 comprises four diodes parallel connected to the respective four IGBTs to form a full bridge.

The bi-directional LLC resonant converter is capable of transferring the power from the input to the output and vice versa, hence is referred as the bi-directional power converter.

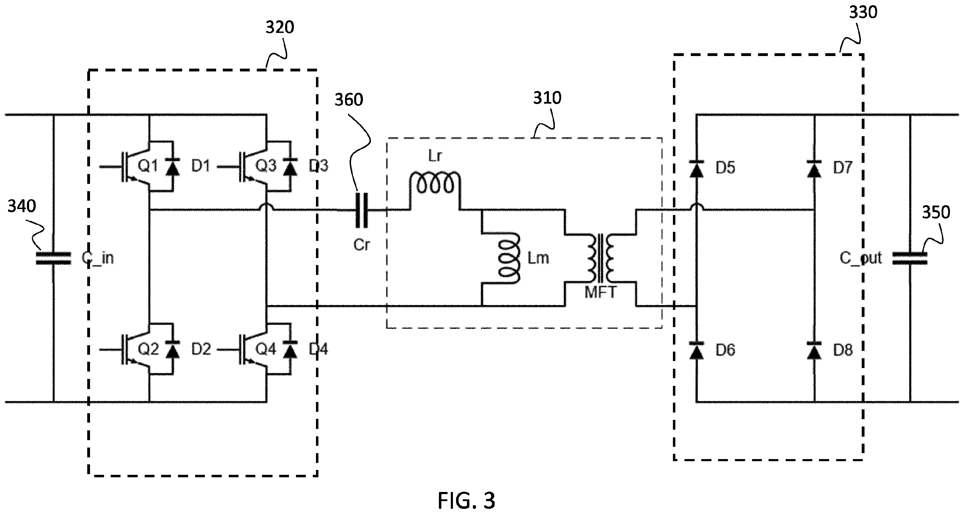

FIG. 3 illustrates an exemplary uni-directional power converter according to an embodiment of the present disclosure. In particular, FIG. 3 illustrates a uni-directional LLC resonant converter. The uni-directional LLC resonant converter comprises a transformer 310, a capacitor 360 coupled in series to one node of the primary side of the transformer 310, a primary full bridge 320 coupled in parallel to the primary side of the transformer 310, a secondary full wave rectifier 330 coupled in parallel to the secondary side of the transformer 310, an input capacitor 340 coupled to the primary full bridge 320 in parallel, and an output capacitor 350 coupled to the secondary full wave rectifier 330 in parallel. The primary full bridge 320 comprises four diodes parallel connected to the respective four IGBTs to form a full bridge. The secondary full wave rectifier 330 comprises four diodes. The uni-directional LLC resonant converter is capable of transferring the power only from the input to the output, hence is referred as the uni-directional power converter.

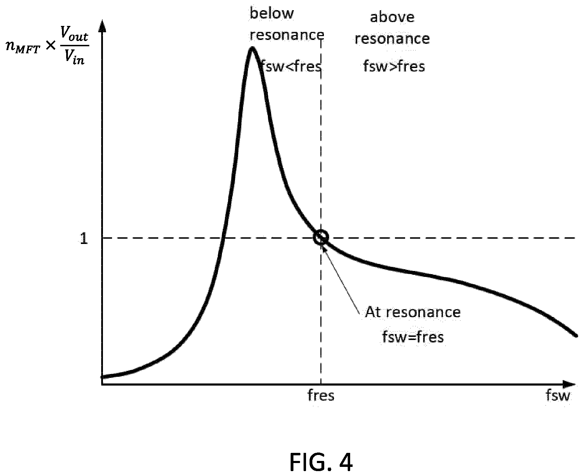

FIG. 4 illustrates voltage gain of a power converter according to an embodiment of the present disclosure with respect to a switching frequency, $f_{sw}$. In particular, FIG. 4 illustrates the voltage gain of an LLC resonant power converter as depicted in FIG. 2 and FIG. 3. The voltage gain, or equivalently a voltage ratio, of a power converter is defined as:

$$d = n_{MFT} \times \frac{V_{out}}{V_{in}} \qquad (1)$$

where $n_{MFT}$, $V_{out}$, and $V_{in}$ denote a winding ratio of the secondary side and the primary side of the transformer 210, an output voltage of the power converter, and an input voltage of the power converter, respectively. When the switching frequency of the modulation signals, wherein the modulation signals drive the bridges 220, 230, and 320, is equal to a resonant frequency of the power converter, the voltage gain is equal to 1, or equivalently a unity gain. When operating the LLC resonant power converter of FIG. 2 or FIG. 3 in unity gain operation point, the primary side full bridge 220 or 320 works in a zero-voltage switching mode and a small current switching off mode, and the diodes in the secondary full bridge 230 or the diodes in the secondary wave rectifier 330 work in a zero current and voltage commutation. The zero-voltage switching is a switching technique to reduce the voltage stress to zero prior to switching on of the semiconductors. Similarly, small-current switching is a switching technique to reduce the current to a small value prior to switching on of the semiconductors, in particular the bridges 220, 230, and 320. The zero current and voltage commutation is a technique to reduce the current and the voltage to zero before changing the current flowing path from one diode to another diode in the semiconductor, in particular the bridges 220, 230, and 320. Consequently, the LLC resonant power converter operating in unity gain operation point exhibits the highest power efficiency.

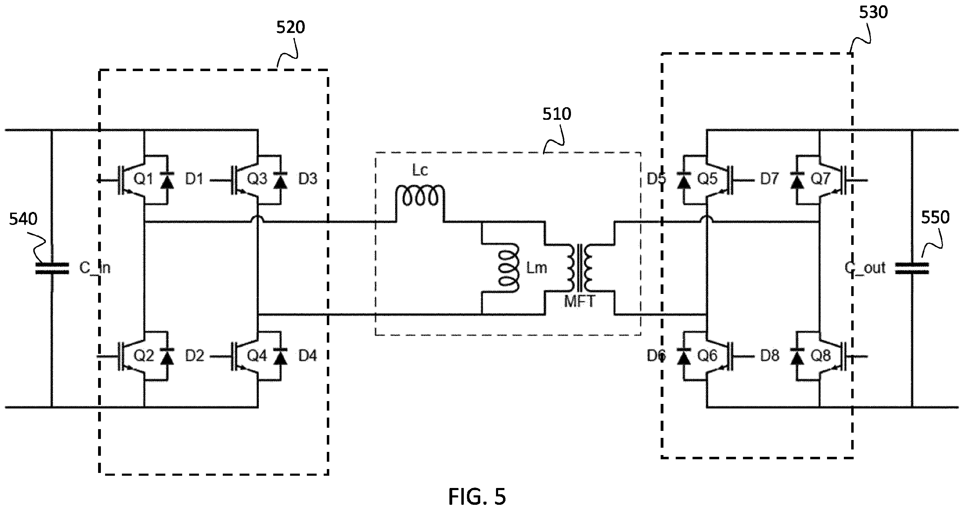

FIG. 5 illustrates an exemplary power converter according to an embodiment of the present disclosure. In particular, FIG. 5 illustrates a dual active bridge, DAB, converter. The DAB converter comprises a transformer 510, a primary full bridge 520 coupled in parallel to the primary side of the transformer 510, a secondary full bridge 530 coupled in parallel to the secondary side of the transformer 510, an input capacitor 540 coupled to the primary full bridge 520 in parallel, and an output capacitor 550 coupled to the secondary full bridge 530 in parallel. The primary full bridge 520 comprises four diodes parallel connected to the respective four IGBTs to form a full bridge. The secondary full bridge 530 comprises four diodes parallel connected to the respective four IGBTs to form a full bridge. The DAB converter is capable of transferring the power from the input to the output and vice versa. Modulation signals control the primary full bridge 520 and the secondary full bridge 530 and/or adjust the transferred power with phase shift angles. Furthermore, a voltage closed loop control may be carried out to control the voltage gain of the power converter. In general, a DAB can achieve the zero-voltage switching on using a conventional zero-voltage switching, but is the power efficiency of the DAB is constrained by voltage gain and total inductance including a series commutation inductor and equivalent leakage inductor of the transformer in the DAB. Furthermore, a DAB cannot switch off in zero current or small current.

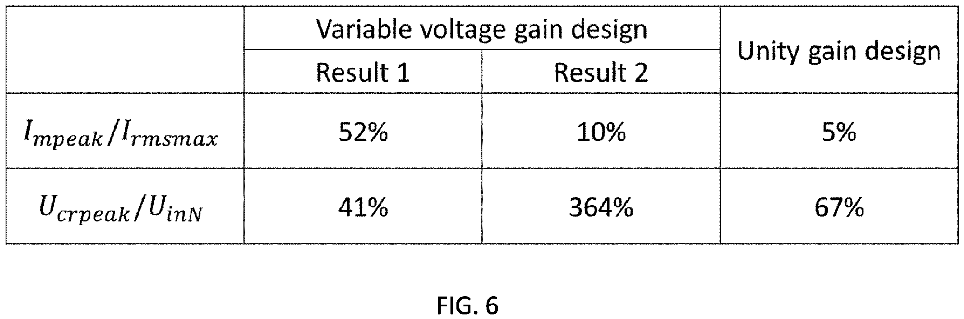

FIG. 6 summarizes the design results using an exemplary power converter according to an embodiment of the present disclosure. In particular, the table in FIG. 6 summaries the magnetizing current and the voltage stress of a resonant capacitor in different exemplary LLC converter designs such as the converters shown in FIG. 2 and FIG. 3, wherein the variable voltage gain design operates in the range of 0.95 to 1.12. The three design results in the table in FIG. 6 use different design methods in a same LLC converter configuration and maybe computed in design process. The designs of Result 1 and Result 2 are designed based on a wide variable voltage gain requirement (0.95~1.12) with different design limitations. The design of Result 1 adjusts the design parameters in order to achieve a reasonable voltage stress of the resonant capacitor. However, the design of Results 2 adjusts the design parameters in order to achieve a small magnetizing current which can influence the design of the MFT. Unity gain design adjusts the design parameters in order to set the LLC's resonant frequency to an expected value or within an expected range. However, the unity gain design can only operate at the resonant frequency and maintain a constant voltage gain, and cannot achieve the required wide variable voltage gain.

As shown, the simulation result of a first variable voltage gain design (Result 1), exhibits a comparatively higher peak current-to-maximum root mean square, rms, current ratio $(I_{mpeak}/I_{rmsmax})$, but a lower voltage stress of the resonant capacitor-to-nominal DC input voltage ratio $(U_{crpeak}/U_{inN})$ with respect to the simulation result of a second variable voltage gain design (Result 2). The peak current-to-maximum rms current ratio is a ratio of peak value of magnetizing current to maximum value of AC current of the MFT. That is, there is a tradeoff between the peak current-to-maximum root mean square, rms, current ratio and the voltage stress of the resonant capacitor-to-nominal input voltage ratio. Both results increase a physical volume of the converter and a power loss. In contrast, the same LLC resonant converter operating in a unity gain achieves the lowest $(I_{mpeak}/I_{rmsmax})$ among the simulated/experimental designs and a significantly reduced $(U_{crpeak}/U_{inN})$ with respect to the results of the second variable voltage gain design.

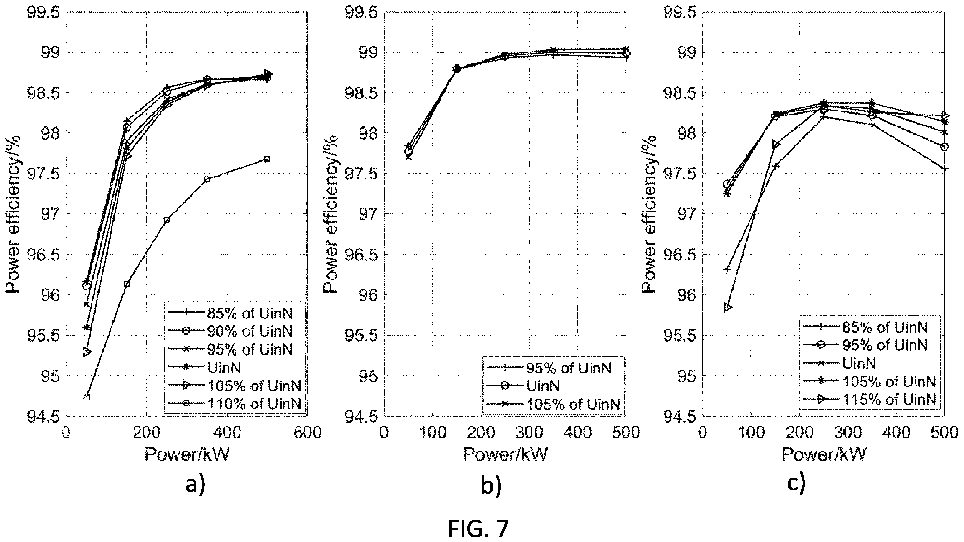

FIG. 7 a) to c) illustrate the simulation results using exemplary power converters according to the embodiments of the present disclosure. FIG. 7 a) depicts the power efficiency of a LLC resonant converter designed for a variable-voltage gain, equivalently the first variable voltage gain design yielding Result 1 in FIG.6, with respect to the transferred power, FIG. 7 b) depicts the power efficiency of a LLC resonant converter designed for a unity gain with respect to the transferred power, and FIG. 7 c) depicts the power efficiency of a DAB converter operating with respect to the transferred power. The data points FIG. 7 a) to c) are obtained for various input voltages. Comparatively, the power efficiency of the LLC resonant converter designed for unity gain operating at three different input voltages achieves the highest power efficiency as shown in FIG. 7 b). Moreover, the power efficiency of the LLC resonant converter designed for a variable-voltage gain records the lowest power efficiency for low power (<150kW) transfer, but achieves a higher power efficiency above relatively higher power (>250KW) transfers with respect to the DAB converter shown in FIG. 7 c). Furthermore, the power efficiency deteriorates significantly, in particular for 85% of the input voltage (UinN), in the LLC resonant converter designed for variable-voltage with respect to the DAB converter. Thus, the LLC resonant converter, in particular designed for unity gain, achieves a high power efficiency, but a limited output voltage range, whereas the DAB converter achieves a relatively smaller deviation in power efficiency at a relatively reduced power efficiency.

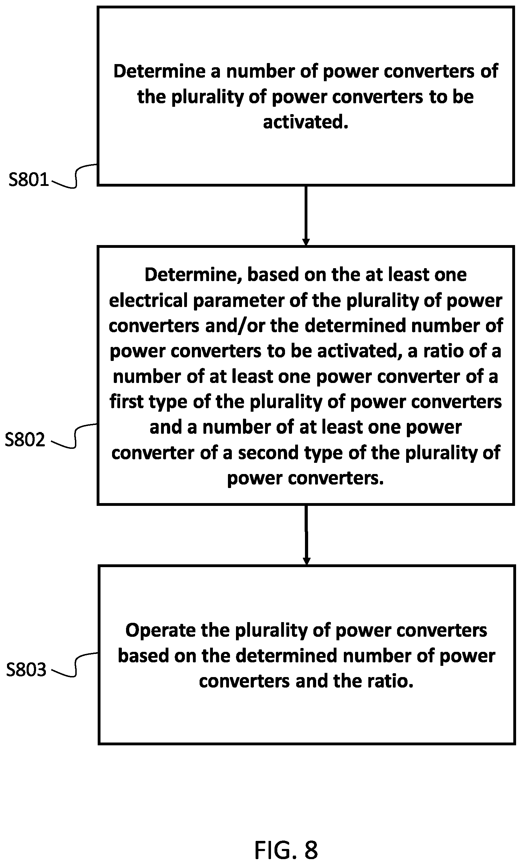

FIG. 8 illustrates a flow chart of a method according to an embodiment of the present disclosure. In block S801, a number of power converters of the plurality of power converters to be activated is determined. In the next block S802, a ratio of a number of at least one power converter of a first type of the plurality of power converters and a number of at least one power converter of a second type of the plurality of power converters is determined, based on the at least one electrical parameter of the plurality of power converters and/or the determined number of power converters to be activated. Further in block S803, the plurality of power converters is operated based on the determined number of power converters and the ratio.

It is understood by a skilled person in the art that the term 'determining' describes any method, in particular measuring, processing, computing, or the like, to gain a knowledge of a parameter of interest and may be replaced, with equivalence, by synonymous terms including 'obtaining' or the like, without departing from the scope of protection of the present disclosure.

According to an embodiment, the method comprises operating the at least one power converter of the first type at a constant gain, in particular a constant voltage gain.

According to an embodiment, the method comprises adjusting a switching frequency of a modulated control signal for the at least one power converter of the first type.

According to an embodiment, the method comprises iteratively determining the total number, determining the ratio, and operating the plurality of power converters based on the total number and the ratio.

According to an embodiment, the switching frequency is determined based on at least one parameter of the at least one power converter of the second type, in particular a resonance frequency.

According to an embodiment, the at least one electrical parameter of the plurality of power converters comprises or is any one of a nominal input voltage, a minimum input voltage rate, a maximum input voltage rate, a minimum output voltage rate, a maximum output voltage rate, a minimum input voltage, and a maximum input voltage.

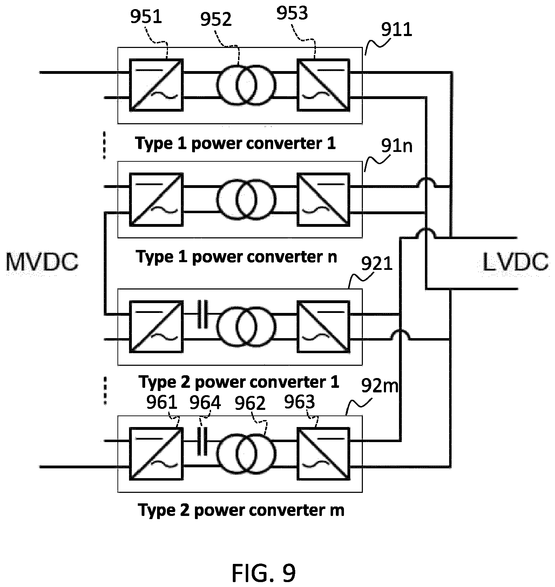

FIG. 9 illustrates an exemplary common power converter comprising a plurality of power converters configured according to an embodiment of the present disclosure. In particular, a plurality of power converters includes n number of type 1 power converters 911 to 91n, DAB converters in this embodiment, and m number of type 2 power converters 921 to 92m, LLC resonant converters in this embodiment. Each of the n number of type 1 power converters 911 to 91n comprises a solid state transformer, SST, in particular a DC/AC inverter 951, a transformer 952, and an AC/DC rectifier 953. Each of the m type 2 power converters 921 to 92n comprises a solid state transformer, SST, in particular a DC/AC inverter 961, a transformer 962, an AC/DC rectifier 963, and a resonant capacitor 964. The n+m power converters are interconnected in a series input and parallel output, ISOP, topological configuration to form the common power converter. Herein, a mixed power converter refers to a power converter comprising at least one first type power converter and at least one second type power converter.

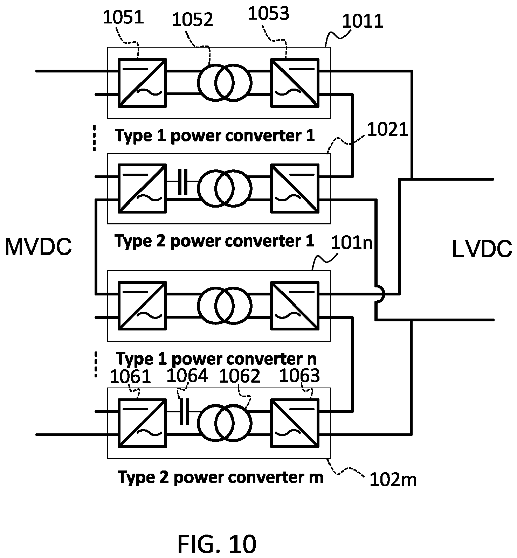

FIG. 10 illustrates an exemplary common power converter comprising a plurality of power converters configured according to an embodiment of the present disclosure. In particular, a plurality of power converters include n number of type 1 power converters 1011 to 101n, DAB converters in this embodiment, and m number of type 2 power converters 1021 to 102n, LLC resonant converters in this embodiment. Each of the n number of type 1 power converters 1011 to 101n comprises a solid state transformer, SST, in particular a DC/AC inverter 1051, a transformer 1052, and an AC/DC rectifier 1053. Each of the m type 2 power converters 1021 to 102n comprises a solid state transformer, SST, in particular a DC/AC inverter 1061, a transformer 1062, an AC/DC rectifier 1063, and a resonant capacitor 1064. The n+m power converters are interconnected in a series input and series-group parallel output topological configuration to form the common power converter. In the series input and series-group parallel output topological configuration, the power converters are divided into groups. Each converter group includes at least one type 1 power converter and at least one type 2 power converter. According to an embodiment, the input terminal of the at least one type 1 power converter is coupled to the input terminal of the at least one type 2 power converter in series and the output terminal of the at least one type 1 power converter is coupled to the output terminal of the at least one type 2 power converter in series. The input terminals of every power converter group are coupled to each other in series and the output terminals of every power converter group are coupled to each other in parallel.

According to an embodiment, the at least one power converter of the first type is configured to output a power different from the at least one power converter of the second type.

According to an embodiment, the common power converter comprises or is a solid-state transformer, SST.

According to an embodiment, the at least one power converter of the first type or the second type comprises or is any one of a dual active bridge converter, DAB, a half bridge converter, a full bridge converter, a matrix converter, a neutral point clamped converter, a flying capacitor converter, a cascaded H-bridge converter, a modular multilevel converter, and a LLC resonant converter.

According to an embodiment, the at least one power converter of the first type and the at least one power converter of the second type are arranged so that the common converter has at least one of a series input and a parallel output, a series input and a series output, or a series input and series-group parallel output.

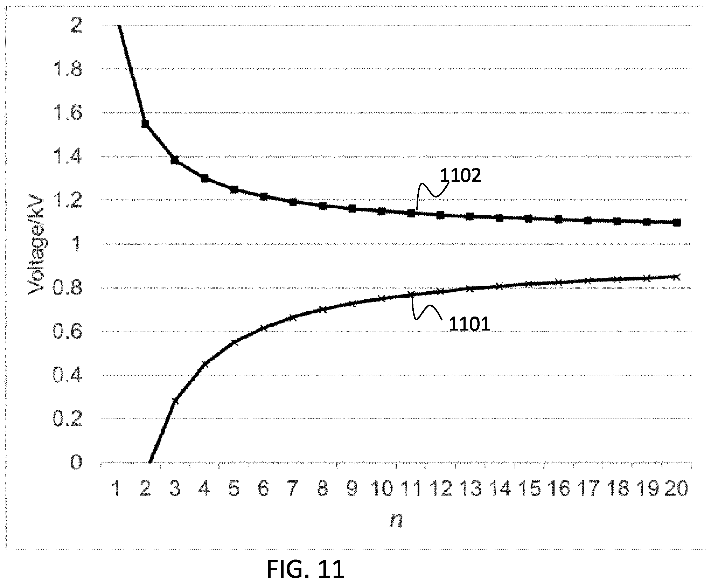

FIG. 11 illustrates a maximum and a minimum input voltage of an exemplary power converter according to an embodiment of the present disclosure. In particular, the exemplary power converter comprising a plurality of power converters are configured as shown in FIG. 9 or FIG. 10. The y-axis and the x-axis of the graph denote input voltage of the first type power converters and the number of the first type power converters, respectively. The minimum input voltage 1101 can be computed as:

$$U_{min} = \frac{U_{dc,N} \times r_{in,min} - (N - n) \times U_{in,N} \times r_{out,min}}{n} \qquad (1)$$

and the maximum input voltage 1102 can be computed as:

$$U_{max} = \frac{U_{dc,N} \times r_{in,max} - (N - n) \times U_{in,N} \times r_{out,max}}{n} \qquad (2)$$

where $U_{dc,N}$, $U_{in,N}$, $r_{in,min}$, $r_{in,max}$, $r_{out,min}$, $r_{out,max}$, $N$, and $n$ denote a nominal input voltage of the power converter, a nominal input voltage of each power converter of the plurality of power converters, a minimum input voltage ratio of the power converter, a maximum input voltage ratio of the power converter, a minimum output voltage ratio of the power converter, a maximum output voltage ratio of the power converter, a total number of the plurality of power converters,

and a number of the first type power converters, of FIG. 9, to be activated, respectively. Considering an overvoltage limitation at the input of each of the plurality of power converters, the minimum number of cells can be calculated by rearranging eq.(1) and substituting an acceptance input over voltage of power converters, $U_{ov}$, into $U_{min}$ of eq.(1). The acceptance input over voltage is a value under which the converter can operate safely. The value is preset in design process by the limitation of semiconductors and DC capacitors.

According to an embodiment, the number of the plurality of power converters can be computed as:

$$N = ceil\left(\frac{U_{dc,N}}{U_{in,N}}\right) \qquad (3)$$

where *ceil*() is a mathematical function to computes the least integer greater than or equal to the value within the bracket. According to an embodiment, the following values can be assigned to the above-mentioned parameters of eq.(1): $U_{dc,N}$ = 20kV , $U_{in,N}$ = 1kV, $r_{in,min}$ = 0.85, $r_{in,max}$ = 1.1, $r_{out,min}$ = 0.95, $r_{out,max}$ = 1.05. Substituting the values into eq.(3) yields $N$ = 20. Further defining $U_{ov}$ = 1.2kV and substituting into eq.(1) yields n = 7. Accordingly, the ratio of the number of first type power converters to be activated and the total number of the plurality of power converters can be computed as:

$$\frac{n}{N} = 0.35 \qquad (4)$$

. According to another embodiment, the number of the first type power converters is equal to the number of the first type power converters to be activated. According to an embodiment, the number of the second type power converters is determined based on the number of the first type power converters and/or the total number of the plurality of power converters. According to yet another embodiment, the ratio of a number of the first type power converters and a number of the second type power converters are computed as:

$$\frac{n_{type1}}{n_{type2}} = \frac{7}{13} \qquad (4)$$

where $n_{type1}$ and $n_{type2}$ denote the number of the first type power converters and the number of the second type power converters, respectively.

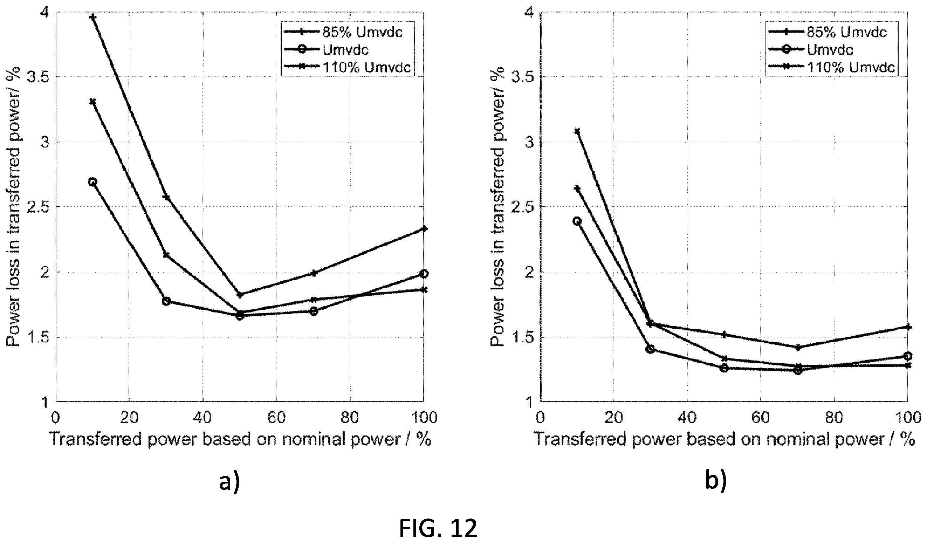

FIG. 12 a) and b) illustrate the power losses in exemplary power converters according to the embodiments of the present disclosure with respect to the transferred power. FIG. 12 a) depicts the power losses in a DAB converter, configured according to an embodiment such as the DAB converter shown in FIG.5, with respect to the transferred power based on a nominal power and FIG. 12 b) depicts the power losses in a mixed power converter, configured according to an embodiment such as the converters shown in FIG. 9 or FIG. 10, with respect to the transferred power based on a nominal power. Comparatively, the mixed power converter achieves up to 0.63% lower power losses in operation of normal voltage in MVDC side. Umvdc means the normal voltage in FIG.12 a) and b). The input voltage of MVDC side is variable in 85%~110% of Umvdc. For a 10MW system, the achieved power loss reduction translates to 63kW of power loss saving.

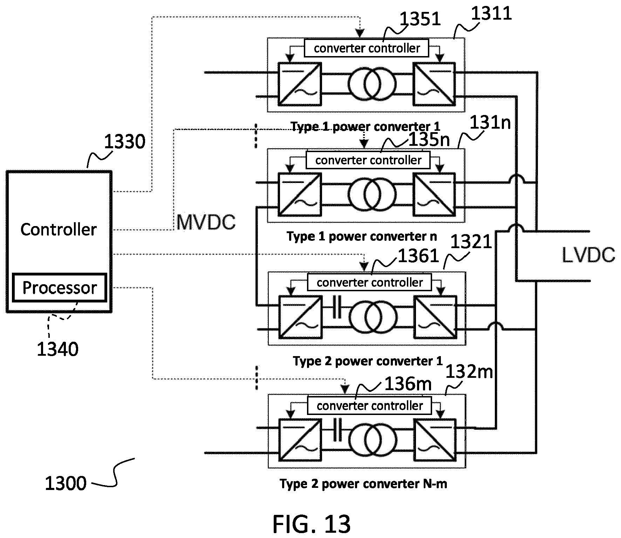

FIG. 13 illustrates a controller and a system comprising the controller and an exemplary common power converter according to an embodiment of the present disclosure. The system 1300 comprises the controller 1330 comprising a processor 1340 configured to perform the method according to any one of the above-described embodiments, and a plurality of power converters 1311 to 131n and 1321 to 132m. The signals from the processor 1340 are fed to each of the converter controllers 1351 to 135n and 1361 to 136m, which in turn controls the respective power converter to activate, deactivate, and reactivate the respective power converter. The power converter of FIG. 13 includes n number of type 1 power converters 1311 to 131n, DAB converters in this embodiment, and m number of type 2 power converters 1321 to 132m, LLC resonant converters in this embodiment. The n+m power converters are interconnected in a series input and parallel output, ISOP, topological configuration to form the common power converter.

According to an embodiment, the processor is configured to operate the at least one power converter of the first type at a constant gain, in particular a constant voltage gain.

According to an embodiment, the processor is configured to adjust a switching frequency of a modulated control signal for the at least one power converter of the first type.

According to an embodiment, the processor is configured to iteratively determine the total number, determining the ratio, and operating the plurality of power converters based on the total number and the ratio.

According to an embodiment, the at least one power converter of the first type is configured to output a power different from the at least one power converter of the second type.

According to an embodiment, the common power converter comprises or is a solid-state transformer, SST.

According to an embodiment, the at least one power converter of the first type or the second type comprises or is any one of a dual active bridge converter, DAB, a half bridge converter, a full bridge converter, a matrix converter, a neutral point clamped converter, a flying capacitor converter, a cascaded H-bridge converter, a modular multilevel converter, and a LLC resonant converter.

According to an embodiment, the at least one power converter of the first type and the at least one power converter of the second type are arranged so that the common converter has at least one of a series input and a parallel output, a series input and a series output, or a series input and series-group parallel output.

According to an embodiment, the switching frequency is determined based on at least one parameter of the at least one power converter of the second type, in particular a resonance frequency.

According to an embodiment, the at least one electrical parameter of the plurality of power converters comprises or is any one of a nominal input voltage, a minimum input voltage rate, a maximum input voltage rate, a minimum output voltage rate, a maximum output voltage rate, a minimum input voltage, and a maximum input voltage.

According to an embodiment, the system operates the at least one power converter of the first type at a constant gain, in particular a constant voltage gain.

According to an embodiment, the system adjusts a switching frequency of a modulated control signal for the at least one power converter of the first type.

According to an embodiment, the system iteratively determines the total number, determining the ratio, and operating the plurality of power converters based on the total number and the ratio.

According to an embodiment, the at least one power converter of the first type is configured to output a power different from the at least one power converter of the second type. According to an embodiment, the common power converter comprises or is a solid-state transformer, SST.

According to an embodiment, the at least one power converter of the first type or the second type comprises or is any one of a dual active bridge converter, DAB, a half bridge converter, a full bridge converter, a matrix converter, a neutral point clamped converter, a flying capacitor converter, a cascaded H-bridge converter, a modular multilevel converter, and a LLC resonant converter.

According to an embodiment, the at least one power converter of the first type and the at least one power converter of the second type are arranged so that the common converter has at least one of a series input and a parallel output, a series input and a series output, or a series input and series-group parallel output.

According to an embodiment, the switching frequency is determined based on at least one parameter of the at least one power converter of the second type, in particular a resonance frequency.

According to an embodiment, the at least one electrical parameter of the plurality of power converters comprises or is any one of a nominal input voltage, a minimum input voltage rate, a maximum input voltage rate, a minimum output voltage rate, a maximum output voltage rate, a minimum input voltage, and a maximum input voltage.

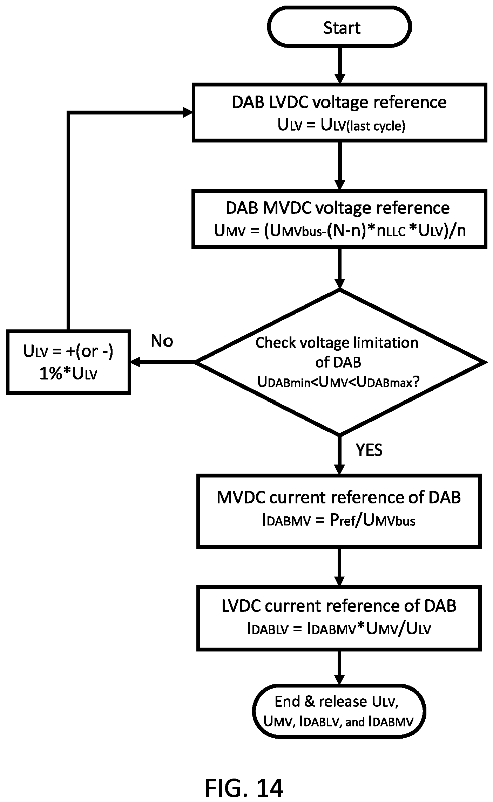

FIG. 14 illustrates a flow chart for an exemplary power control method according to an embodiment of the present disclosure. According to an embodiment, the exemplary control method of FIG. 14 assumes a system 1300 as shown in FIG. 13. The exemplary control method of FIG. 14 targets to operate the second type power converters 1321 to 132m in unity gain. Furthermore, the first type power converters 1311 to 131n operate within the voltage limits computed in eq.(1) and eq.(2). The controller 1340 comprises the processor 1340 being configured to: obtain a DC medium voltage, MVDC voltage measurement of the power converter; compute a DC low voltage, LVDC voltage reference, MVDC voltage reference of DAB converters, MVDC current (or power) reference, and LVDC current (or power) reference with the MVDC voltage; feed the computed voltage and current references to each of the converter controllers 1351 to 135n and 1361 to 136m. The a portion of the converter controllers 1351 to 135n of the first type power converters 1311 to 131n control the DC current (or power) of AC/DC in MVDC side based on the computed MVDC current (or power) reference and control DC voltage of AC/DC in LVDC side based on the computed LVDC voltage reference. The other portion of the power converter controllers 1351 to 135n of the first type power converters 1311 to 131n control DC voltage of AC/DC in MVDC side based on the computed MVDC voltage reference of DAB and control DC current (or power) of AC/DC in LVDC side based on the computed LVDC current (or power) reference. The LLC resonant power converters 1321 to 132m may operate in unity gain with open loop control.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for power control of a common power converter comprising a plurality of power converters, the method comprising:

   determining a number of power converters of the plurality of power converters to be activated;
   determining, based on the at least one electrical parameter of the plurality of power converters and/or the determined number of power converters to be activated, a ratio of a number of at least one power converter of a first type of the plurality of power converters and a number of at least one power converter of a second type of the plurality of power converters; and
   operating the plurality of power converters based on the determined number of power converters and the ratio.

2. The method of claim 1, comprising operating the at least one power converter of the first type at a constant gain, in particular a constant voltage gain.

3. The method of claim 1 or 2, comprising adjusting a switching frequency of a modulated control signal for the at least one power converter of the first type.

4. The method of any one of claims 1 to 3, comprising iteratively determining the total number, determining the ratio, and operating the plurality of power converters based on the total number and the ratio.

5. The method of any one of claims 1 to 4, wherein the at least one power converter of the first type is configured to output a power different from the at least one power converter of the second type.

6. The method of any one of claims 1 to 5, wherein the common power converter comprises or is a solid-state transformer, SST.

7. The method of any one of claims 1 to 6, wherein the at least one power converter of the first type or the second type comprises or is any one of a dual active bridge converter, DAB, a half bridge converter, a full bridge converter, a matrix converter, a neutral point clamped converter, a flying capacitor converter, a cascaded H-bridge converter, a modular multilevel converter, and a LLC resonant converter.

8. The method of any one of claims 1 to 7, wherein the at least one power converter of the first type and the at least one power converter of the second type are arranged so that the common converter has at least one of a series input and a parallel output, a series input and a series output, or a series input and series-group parallel output.

9. The method of any one of claims 3 to 8, wherein the switching frequency is determined based on at least one parameter of the at least one power converter of the second type, in particular a resonance frequency.

10. The method of any one of claims 1 to 9, wherein the at least one electrical parameter of the plurality of power converters comprises or is any one of a nominal input voltage, a minimum input voltage rate, a maximum input voltage rate, a minimum output voltage rate, a maximum output voltage rate, a minimum input voltage, and a maximum input voltage.

11. A controller for power control of a common power converter comprising a plurality of power converters, the controller comprising a processor being configured to perform the method according to any one of claims 1 to 10.

12. A system for power control of a common power converter comprising a plurality of power converters and a controller according to claim 11, the controller comprises a processor being configured to perform the method according to any one of claims 1 to 10.

FIG. 1

FIG. 2

FIG. 3

FIG. 4

FIG. 5

| | Variable voltage gain design | | Unity gain design |
|---|---|---|---|
| | Result 1 | Result 2 | |
| $I_{mpeak}/I_{rmsmax}$ | 52% | 10% | 5% |
| $U_{crpeak}/U_{inN}$ | 41% | 364% | 67% |

FIG. 6

EP 4 191 848 A1

a)

b)

c)

FIG. 7

EP 4 191 848 A1

S801 — Determine a number of power converters of the plurality of power converters to be activated.

S802 — Determine, based on the at least one electrical parameter of the plurality of power converters and/or the determined number of power converters to be activated, a ratio of a number of at least one power converter of a first type of the plurality of power converters and a number of at least one power converter of a second type of the plurality of power converters.

S803 — Operate the plurality of power converters based on the determined number of power converters and the ratio.

FIG. 8

951 952 953
911

Type 1 power converter 1
91n

MVDC

Type 1 power converter n
921

LVDC

Type 2 power converter 1
92m
961 964 962 963

Type 2 power converter m

FIG. 9

1051   1052   1053   1011

Type 1 power converter 1

1021

Type 2 power converter 1

101n

MVDC

Type 1 power converter n

1061   1064   1062   1063

Type 2 power converter m

102m

LVDC

FIG. 10

FIG. 11

FIG. 12

FIG. 13

Start

DAB LVDC voltage reference
$U_{LV} = U_{LV(last\ cycle)}$

DAB MVDC voltage reference
$U_{MV} = (U_{MVbus}-(N-n)*n_{LLC}*U_{LV})/n$

Check voltage limitation
of DAB
$U_{DABmin}<U_{MV}<U_{DABmax}$?

No

$U_{LV} = +(or\ -)$
$1\%*U_{LV}$

YES

MVDC current reference of DAB
$I_{DABMV} = P_{ref}/U_{MVbus}$

LVDC current reference of DAB
$I_{DABLV} = I_{DABMV}*U_{MV}/U_{LV}$

End & release $U_{LV}$,
$U_{MV}$, $I_{DABLV}$, and $I_{DABMV}$

FIG. 14

Europäisches
Patentamt

European
Patent Office

Office européen
des brevets

# EUROPEAN SEARCH REPORT

Application Number

**EP 21 21 1773**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2020 103 761 A4 (JAYAVANI LAGUDU [IN]; KUMAR MELIMI RAVI [IN] ET AL.) 1 April 2021 (2021-04-01) * the whole document * | 1-12 | INV. H02M1/00 H02M3/335 H02M3/00 H02M1/10 |
| A | YAO JINJIE ET AL: "An ISOP Hybrid DC Transformer Combining Multiple SRCs and DAB Converters to Interconnect MVDC and LVDC Distribution Networks", IEEE TRANSACTIONS ON POWER ELECTRONICS, INSTITUTE OF ELECTRICAL AND ELECTRONICS ENGINEERS, USA, vol. 35, no. 11, 2 April 2020 (2020-04-02) , pages 11442-11452, XP011801356, ISSN: 0885-8993, DOI: 10.1109/TPEL.2020.2983954 [retrieved on 2020-07-28] * the whole document * | 1-12 | |

TECHNICAL FIELDS SEARCHED (IPC)

H02M

The present search report has been drawn up for all claims

| Place of search | Date of completion of the search | Examiner |
|---|---|---|
| The Hague | 16 May 2022 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 21 1773**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-05-2022**

| Patent document cited in search report | Publication date | Patent family member(s) | Publication date |
|---|---|---|---|
| AU 2020103761 A4 | 01-04-2021 | NONE | |

EPO FORM P0459